# EUROPEAN PATENT SPECIFICATION

(11) **EP 3 630 437 B1**
(45) Date of publication and mention of the grant of the patent: **06.07.2022**
(21) Application number: 18722610.5
(22) Date of filing: 15.05.2018
(51) Int. Cl.: B29B 15/04, B29B 13/06, B29B 7/74, B29B 7/00, B29B 7/88

(54) **SYSTEM AND PROCESS FOR KNEADING AN ELASTOMERIC COMPOSITE USING CONTINUOUS LIQUID MIXING**
SYSTEM UND VERFAHREN ZUM KNETEN EINES ELASTOMERVERBUNDWERKSTOFFS UNTER VERWENDUNG EINER KONTINUIERLICHEN FLÜSSIGKEITSMISCHUNG
SYSTÈME ET PROCÉDÉ DE MALAXAGE D'UN COMPOSITE ÉLASTOMÈRE AU MOYEN D'UN MÉLANGE LIQUIDE CONTINU

(30) Priority: 30.05.2017 FR 1754738
(43) Date of publication of application: 08.04.2020
(73) Proprietor: COMPAGNIE GENERALE DES ETABLISSEMENTS MICHELIN, 63000 Clermont-Ferrand (FR)
(72) Inventor: PIALOT, Frédéric, 63040 Clermont-Ferrand Cedex 9 (FR); HOMBERT, Christophe, 63040 Clermont-Ferrand Cedex 9 (FR); VERONNET, Jean-Luc, 63040 Clermont-Ferrand Cedex 9 (FR); MIOCHE, Gilles, 63040 Clermont-Ferrand Cedex 9 (FR)
(74) Representative: Roussy, Delphine
(86) International application number: PCT/EP2018/062475
(87) International publication number: WO 2018/219631

(56) References cited:
- EP-A1- 0 766 996
- EP-A1- 1 739 117
- EP-A2- 0 426 019
- WO-A1-03/031131
- CH-B1- 700 326
- FR-A1- 2 796 568
- GB-A- 806 362
- US-A- 2 371 722
- US-A- 4 107 793
- US-A- 6 040 364
- US-A1- 2013 032 045

## Description

### TECHNICAL FIELD

The invention relates to the continuous controlled progression of an composite within pre-defined coagulum production zones during production of an elastomeric masterbatch composition. A residence time of the composite in each coagulum production zone is controlled to effect progressive coagulation prior to transport of the composite to a subsequent coagulum production zone.

### BACKGROUND

A masterbatch (or masterbatch composition) is an elastomeric composite in which a charge has been introduced along with other optional additives. Masterbatches are often destined for the production of rubber compositions, for example, in the manufacture of tires or semi-finished products for tires (including but not limited to profiled products such as treads). Various methods exist for producing masterbatches, examples of which are disclosed by US Patent Nos. 6,048,923 and 6,075,084, PCT publication WO03/031131, European publications EP0426019A2 and EP0766996, French publication FR2796568 and also by Japanese Patent No. JP5139610.

In the realization of rubber mixtures in a liquid phase (aqueous or solvent), there is a phase during which a masterbatch is derived from an elastomer in a liquid phase (e.g., emulsion or latex, solution). During this phase, the elastomer desirably exhibits a nano-distribution of charge particles (organic or inorganic) in the elastomer matrix. This nano-distribution is often created by a coagulum reactor, a mixer or an equivalent means that combines the elastomer in a liquid phase with a mixture of liquid and charges (hereinafter a "slurry"). Fixation of the charge in the elastomer matrix follows, and this phase corresponds to a state of "coagulation" between the two liquids.

Some masterbatch production processes rely upon principles of homo-coagulation, wherein aggregation occurs in a suspension composed of similar mono-dispersed colloidal particles. For such processes, a nano-distribution of the charge is not guaranteed, even when the charge is already finely fragmented (e.g., size <100nm). The charge is often trapped by the coagulation of the matrix, and the free charge exhibits a consequent tendency to re-flocculate.

Hetero-coagulation occurs upon aggregation in a suspension composed of dissimilar colloidal particles. Hetero-coagulation is a process of coagulation between particles with different characteristics (e.g., size, chemical composition, charges, etc.) that leads to cluster aggregation followed by a solid or gel-like structure. Hetero-coagulation may be driven by interaction between oppositely charged particles and/or induced by shear.

In order to sustain both rapid coagulation and a continuous process, the disclosed invention provides equipment that adapts itself to utilizing a principle of hetero-coagulation. Being that multiple types of masterbatch compositions are contemplated during tire production, the invention adapts the structure of established coagulum production zones according to the progress of the coagulation reaction.

### SUMMARY

The invention provides a system for continuous controlled progression of a composite within pre-defined coagulum production zones during a coagulation preparation cycle according to claim 1. The system includes an emulsion storage installation having an emulsion reservoir equipped with an agitator, the emulsion reservoir storing an elastomer emulsion. The system also includes a slurry storage installation having a slurry reservoir equipped with an agitator, the slurry reservoir storing a slurry comprising an aqueous solution of charge particles. A mixing installation is provided in the system that has a mixer in fluid communication with each of emulsion reservoir and slurry reservoir, with the mixer putting in contact, in a mixing zone thereof, a flow of the elastomer emulsion and a flow of the slurry, with one of the flows leading into the other flow and both flows being brought to low pressure before their contact with one another. A continuous kneading installation receives the composite from the mixing installation and transports the composite through each coagulum production zone such that a residence time of the composite in each coagulum production zone is controlled prior to transport of the composite to a subsequent coagulum production zone.

The coagulum production zones include a homogenizing zone having a homogenizer with a helical homogenizing agitator of predetermined length. The helical homogenizing agitator is rotatably disposed within a homogenizing chamber having an ingress extent that establishes fluid communication between the mixer and the homogenizer and an opposed egress extent that establishes fluid communication between the homogenizer and a kneading zone.

The coagulum production zones also include a kneading zone having a kneading and transporting agitator of predetermined length. The kneading and transporting agitator is rotatably disposed within a kneading chamber having an ingress extent disposed adjacent the egress extent of the of homogenizing chamber and an opposed egress extent proximate an ingress of a wringing zone. The kneading and transporting agitator has a transporting section and a kneading section that facilitate complementary processes in the kneading zone.

The coagulum production zones further include a wringing zone including a wringing agitator of pre-determined length. The wringing agitator is rotatably disposed within a wringing chamber having an ingress extent disposed proximate the egress extent of the kneading chamber and an opposed egress extent from which the composite is discharged as a coagulum. The wringing agitator includes each of a texturing section and a wringing section that facilitate complementary processes in the wringing zone.

In some embodiments, the transporting section of the kneading and transporting agitator includes a freely rotating transport screw disposed proximate the egress extent of the kneading zone. The transport screw has transport threads of commensurate pitch that are evenly distributed along a predetermined extent of the kneading and transporting agitator. In some embodiments, the transport screw is an Archimedes screw that maintains a predetermined clearance between an outermost periphery of a transport thread and an inside surface of the kneading chamber.

In some embodiments, the kneading section of the kneading and transporting agitator extends between the ingress extent of the kneading chamber toward the transporting section. The kneading section includes one or more consecutively disposed screw conveyors interrupted by a commensurate number of collinearly disposed transitional transport threads. In some of these embodiments, each screw conveyor has a generally spiral element that maintains a predetermined clearance between itself and an inner wall surface of the kneading chamber.

In some embodiments, the transitional transport threads include an introductory transport thread disposed proximate the ingress extent of the kneading chamber at which the composite starts to undergo a kneading production process.

In some embodiments, the texturing section of the wringing agitator includes a freely rotating texturing screw disposed proximate the egress extent of the kneading chamber. The texturing screw has multiple cut-off threads that are evenly distributed along a predetermined extent of the wringing element. For some of these embodiments, the texturing screw is an Archimedes screw that maintains a predetermined clearance between an outermost periphery of a cut-off thread and an inside surface of the wringing chamber.

In some embodiments, at least one transport thread is disposed proximate the egress extent of the kneading chamber to effect a continuous transition between the kneading zone and the wringing zone.

In some embodiments, the wringing section of the wringing agitator extends from an extent of the wringing element proximate the egress extent of the wringing chamber toward the texturing section. For such embodiments, the wringing section includes a conical screw. The conical screw may include helical threads that maintain a predetermined clearance with respect to an inner wall surface of the wringing chamber.

In some embodiments, the wringing section of the wringing agitator further includes one or more transport threads disposed intermediate the conical screw and the texturing section.

Each of the kneading chamber and the wringing chamber has a predetermined cross-sectional geometry selected from a generally annular configuration, a U-shaped chamfer and a U-shaped corner. For some embodiments, one or more anti-rotation bars are disposed within at least a portion of at least one of the kneading chamber and the wringing chamber.

The invention also provides a process for continuous controlled progression of a composite within pre-defined coagulum production zones during production of an elastomeric masterbatch composition according to claim 15. The process includes the following steps: providing each of an emulsion stored in a liquid phase in an emulsion reservoir and a slurry stored in a liquid phase in a slurry reservoir; delivering simultaneously a predetermined volume of the emulsion and a predetermined volume of the slurry to a mixing installation having a mixer in fluid communication with each of the emulsion reservoir and the slurry reservoir; preparing the composite from the predetermined volume of the emulsion and the predetermined volume of the slurry; discharging the composite from the mixer as a fine dispersion of elastomeric charge; and transporting the composite through each coagulum production zone of a continuous kneading installation such that a residence time of the composite in each coagulum production zone is controlled prior to transport of the composite to a subsequent coagulum production zone.

Some process embodiments also include the step of putting in contact, in a mixing zone of the mixer, a flow of the elastomer emulsion and a flow of the slurry, with one of the flows leading into the other flow and both flows being brought to low pressure before their contact with one another.

The coagulum production zones include a homogenizing zone with a homogenizer having a helical homogenizing agitator of predetermined length rotatably disposed within a homogenizing chamber; a kneading zone with a kneading and transporting agitator of predetermined length rotatably disposed within a kneading chamber, the kneading and transporting agitator (24a) having a transporting section and a kneading section that facilitate complementary processes in the kneading zone; and a wringing zone including a wringing agitator of pre-determined length rotatably disposed within a wringing chamber, the wringing agitator including each of a texturing section and a wringing section that facilitate complementary processes in wringing zone.

In some embodiments, the process also includes the steps of discharging the composite from the mixer to the homogenizing zone and, with the homogenizing agitator, agitating the composite at a minimum shearing rate of 1000 s⁻¹ while simultaneously effecting a controlled progression of the composite toward the kneading zone.

In some embodiments, the process also includes the steps of discharging the composite from the homogenizing zone to the kneading zone, and, with the kneading and transporting agitator, agitating the composite at a minimum shearing rate of 500 s⁻¹ while simultaneously effecting a controlled progression of the composite toward the wringing zone.

In some embodiments, the process also includes the steps of discharging the composite from the kneading zone to the wringing zone; delimiting a coagulum size of the composite along the texturing section before introducing the composite to the wringing section; and with the wringing agitator, agitating the composite at a minimum shearing rate of 200 s⁻¹ while simultaneously effecting a controlled progression of the composite for discharge from the controlled kneading installation.

In some embodiments, the process also includes the step of discharging the composite from the continuous kneading installation. Some of these embodiments also include the step of delivering simultaneously the emulsion and the slurry to the mixing installation.

Other aspects of the disclosed invention will become readily apparent from the following detailed description.

### BRIEF DESCRIPTION OF DRAWINGS

The nature and various advantages of the presently disclosed invention will become more apparent upon consideration of the following detailed description, taken in conjunction with the accompanying drawings, in which like reference characters refer to like parts throughout, and in which:
FIG. 1 shows a schematic view of a system for producing masterbatches of rubber mixtures.
FIG. 2 shows a cross-sectional view of an exemplary mixer used with the system of FIG. 1.
FIGS. 3, 3A and 3B show respective perspective, end and sectional views of an exemplary homogenizing tool used with system of FIG. 1.
FIGS. 4, 4A and 4B show respective perspective, end and sectional views of an exemplary transport tool used with the system of FIG. 1.
FIGS. 5, 5A and 5B show respective perspective, end and sectional views of an exemplary kneading tool used with the system of FIG. 1.
FIGS. 6, 6A and 6B show respective perspective, end and sectional views of an exemplary shearing tool used with the system of FIG. 1.
FIGS. 7, 7A and 7B show respective perspective, end and sectional views of a dewatering tool used with the system of FIG. 1.
FIGS. 8, 8A, 8B and 8C show end views of different exemplary conduits used with the system of FIG. 1 and the tools of FIGS. 3 to 7B.

### DETAILED DESCRIPTION

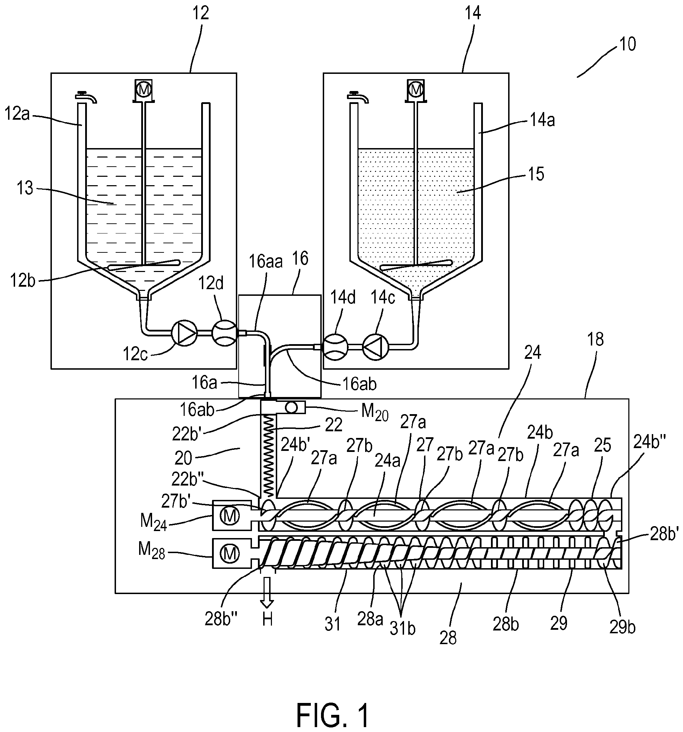

Now referring further to the figures, in which like numbers identify like elements, FIG. 1 shows an exemplary coagulum preparation system 10 that realizes a continuous flow process for producing an elastomer masterbatch composition (as used herein, the terms "elastomer masterbatch composition" and "masterbatch composition" are interchangeable). System 10 includes equipment in which multiple distinct coagulum production zones are established. The equipment maintains the rhythm of production of a masterbatch composition by controlling the residence time of an intermediate composite in each established production zone prior to transport of the composite to a subsequent production zone. Thus, in a given masterbatch production cycle, a masterbatch composition recipe is selected from among a plurality of masterbatch composition recipes. Control of the masterbatch properties is effected not only by controlling the ingredients selected for a given masterbatch but also by controlling the time during which the ingredients reside in a given production zone during a production cycle in order to master the level of charge in the masterbatch. This control includes controlling the time at which the composite enters and exits each production zone (or "residence time"). The displacement of the composite through system 10 is thus realized at a constant and regulated speed.

Still referring to Figure 1, among the equipment provided with system 10 is an emulsion storage installation 12 having an emulsion reservoir 12a equipped with an agitator 12b. Emulsion reservoir 12a stores an elastomer emulsion (or latex) 13. The elastomer is selected from natural rubber, various synthetic elastomers (e.g., SBR, BR, etc.) and various elastomer blends.

System 10 also includes a slurry storage installation 14 having a slurry reservoir 14a equipped with an agitator 14b. Slurry reservoir 14a stores a slurry 15 in which particles of charge are dispersed in water. The charge is selected from one or more known materials, including but not limited to carbon black, silica, kaolin, chalk, synthesized organic charges, natural organic charges (e.g., wood fibers, cellulose fibers, etc.) and equivalents and combinations thereof.

Each agitator 12b, 14b maintains a respective low turbulence level that sufficiently ensures particle dispersion in each of the emulsion and the slurry, although it is understood that equivalent agitation means may be substituted therefor. In order to avoid decantation, it is possible to incorporate a Microfluidizer^{®} that fragments any charge aggregates that remain in the dispersion. The Microfluidizer^{®} may be disposed upstream or downstream of slurry reservoir 14 (for example, between the slurry reservoir and a peristaltic pump 14c as described and shown herein).

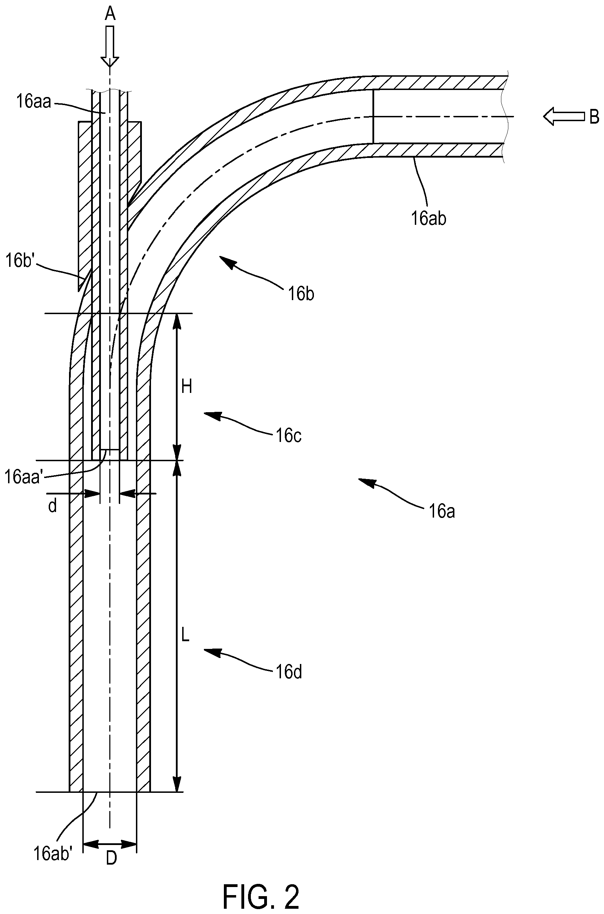

Referring further to FIG. 1 and also to FIG. 2, system 10 also includes a mixing installation 16 having a mixer 16a in fluid communication with each of emulsion reservoir 12a and slurry reservoir 14a. An emulsion conduit 16aa with a predetermined diameter d, together with a peristaltic pump (or series of pumps) 12c disposed intermediate the emulsion conduit and emulsion reservoir 12a, conveys a precise volume of emulsion 13 from emulsion reservoir 12a to mixer 16a. In a similar manner, a slurry conduit 16ab with a predetermined diameter D, together with a peristaltic pump (or series of pumps) 14c disposed intermediate the slurry conduit and slurry reservoir 14a, conveys a precise volume of slurry 15 from slurry reservoir 14a to mixer 16a. It is understood that peristaltic pump 14c may be substituted by one or more equivalent devices, including but not limited to one or more positive displacement pumps (e.g., eccentric rotor pumps, diaphragm pumps, piston pumps, etc.).

A respective mass flow meter 12d, 14d may be operatively disposed relative to emulsion conduit 16aa and slurry conduit 16ab so as directly measure the mass and density of the conveyed emulsion and slurry. Each mass flow meter 12d, 14d may be a Coriolis flow meter positioned downstream of a corresponding peristaltic pump, although it is understood that an equivalent apparatus may be substituted therefor.

As shown further in FIG. 2, mixer 16a receives emulsion 13 and slurry 15 and effects a continuous process of preparing and discharging a composite as a fine dispersion of charge in the elastomeric matrix (or "dispersion") therefrom. As used herein, a "continuous" process identifies a process or any portion of a process in which all of the steps can be executed without interruption. Continuous processes eliminate the need for intermediary steps and thereby sustain diverse industrial applications (for example, the production of various rubber mixtures destined for the production of tires). An example of mixer 16a as described and shown herein is disclosed by Applicant's published application WO2017/021219.

Mixer 16a includes a supply section 16b, a parallel effluent section 16c disposed downstream thereof and a mixing section 16d disposed further downstream of both the supply section and the effluent section. During a coagulation preparation cycle, emulsion 13 and slurry 15 are simultaneously fed to mixing section 16d. The feed rate for each of the emulsion and the slurry can be precisely metered so as to preserve a continuous flow process and obviate the presence of free latex and uncoagulated filler upon discharge from system 10.

Referring further to FIG. 2, mixer 16a receives the incoming flows from emulsion conduit 16aa and slurry conduit 16ab in supply section 16b thereof. Along a convergence portion 16b' of supply section 16b, emulsion conduit 16aa conveys the emulsion from emulsion reservoir 12a toward mixer 16a (see arrow A). In this convergence portion, emulsion conduit 16aa penetrates the delivery path of slurry conduit 16ab leading from slurry reservoir 14a toward mixer 16a (see arrow B). Emulsion conduit 16aa and slurry conduit 16ab remain coaxial until effluent section 16c, having a predetermined length H, terminates at a discharge extent 16aa' of emulsion conduit 16aa.

The incoming flows from emulsion conduit 16aa and slurry conduit 16ab maintain low pressure upon mutual contact in mixing section 16d. Discharge extent 16aa' of emulsion conduit 16aa and a discharge extent 16ab' of slurry conduit 16ab delineate together the boundaries of mixing section 16d having a predetermined length L.

It is understood that conduits 16aa and 16ab establish a relationship among supply section 16b, effluent section 16c and mixing section 16d that preserves stable and efficient coagulation. The length and the diameter of each conduit are adjustable as a function of the selected masterbatch composition so long as the established relationship is respected among the sections of mixer 16a. For example, this example shows slurry conduit 16ab having a greater interior diameter D than the interior diameter d of emulsion conduit 16aa. A person of ordinary skill would understand that the inverse configuration could also be employed (i.e., emulsion conduit 16aa having the greater diameter) while maintaining the functional relationship among supply section 16b, effluent section 16c and mixing section 16d.

Discharge extent 16ab' of slurry conduit 16ab also provides an egress for unimpeded discharge of the composite from mixer 16a to a continuous kneading installation 18 that transports the composite for further processing. In order to realize the propagation of nano-coagulation at the macro level, continuous kneading installation 18 must transport the composite without disturbing instantaneous flow. Functional structure is therefore realized that delineates multiple distinct coagulum production zones (or "production zones") while ensuring continuous controlled progression of the composite within each production zone.

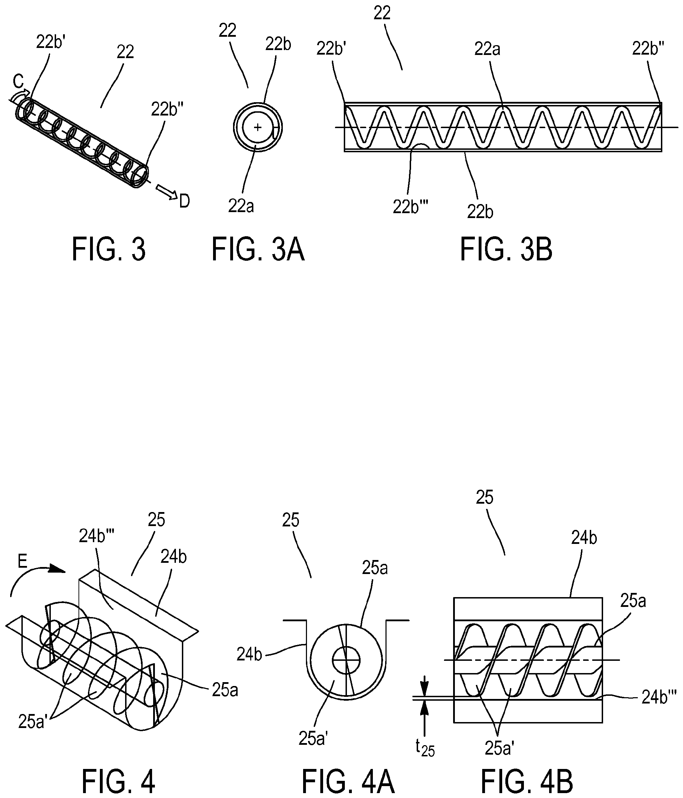

Referring further to FIG. 1 and also to FIGS. 3, 3A and 3B, mixer 16a discharges the composite into a homogenizing zone 20 of continuous kneading installation 18, wherein the charge particles (e.g., charges of silica) are more finely dispersed. In homogenizing zone 20, an exemplary homogenizer 22 is provided that includes a helical homogenizing agitator 22a of predetermined length rotatably disposed within a generally annular homogenizing chamber 22b. It is understood that homogenizing chamber 22b may assume any cross-sectional geometry that is amenable to practice of the invention.

Homogenizing chamber 22b has an ingress extent 22b' disposed proximate a discharge end of mixer 16a (and more particularly adjacent discharge extent 16ab' of slurry conduit 16ab) and an opposed egress extent 22b" proximate an ingress of a kneading zone 24 of continuous kneading installation 18 (further described herein with reference to FIGS. 4 to 5B). The fluid communication established between discharge end of mixer 16a and ingress extent 22b' of homogenizing chamber 22b sustains uninterrupted discharge of the composite, generally at or near atmospheric pressure and typically by the effect of gravity. Homogenizer 22 may be selected from a variety of commercially available devices.

In the initial seconds following the discharge of the composite by mixer 16a, the composite has not yet reacted at the macro level. During homogenization, homogenizing agitator 22a rotates in a given direction (see arrow C of FIG. 3) so as to generate sufficient friction between the composite conveyed thereby and an inner wall surface 22b'" of homogenizing chamber 22b. The geometry of helical agitator 22a relative to that of homogenizing chamber 22b controllably propels the composite toward a subsequent production zone (i.e., kneading zone 24)(see arrow D of FIG. 3). The agitator's rotational speed, governed by a motor M₂₀, establishes the conveyance rate of the composite and the resultant shearing efficiency (e.g., in some embodiments, shearing rates greater than 1000 s⁻¹ are realized). The maintenance of a given rotational speed controls the composite's residence time in homogenization zone 22 and thus the level of coagulation efficiency realized by the composite upon egress therefrom.

Still referring to FIG. 1 and referring also to FIGS. 4 to 5B, mixer 16a discharges the composite into a kneading zone 24 of continuous kneading installation 18, wherein the nano-coagulums must be agglomerated in order to realize an eventual macrostructure in the composite. Thus, the enhanced coagulation efficiency realized within homogenization zone 20 enables effective nano-distribution of the charge in the elastomeric matrix within kneading zone 24.

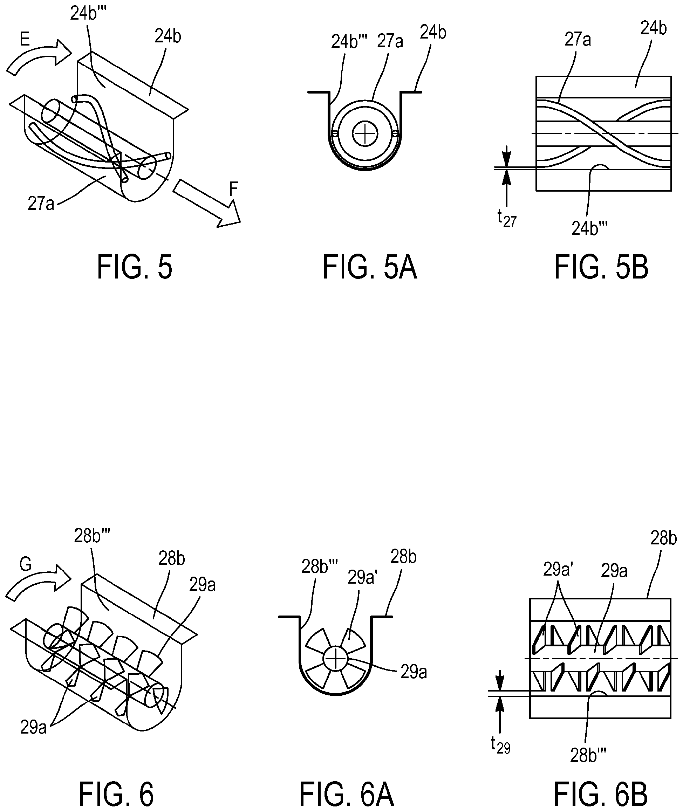

In kneading zone 24, an exemplary kneading and transporting element includes a kneading agitator 24a of predetermined length rotatably disposed within a kneading chamber 24b. Kneading chamber 24b has an ingress extent 24b' disposed proximate a discharge end of homogenizing zone 20 (and more particularly adjacent egress extent 22b" of homogenizing chamber 22b) and an opposed egress extent 24b" proximate an ingress of a wringing zone 28 of continuous kneading installation 18 (further described herein with reference to FIGS. 6 to 7B). It understood that kneading chamber 24b may assume any cross-sectional geometry that is amenable to practice of the invention.

Kneading and transporting agitator 24a includes a transporting section 25 and a kneading section 27 that facilitate complementary processes in kneading zone 24. Referring to FIGS. 4, 4A and 4B, transporting section 25 includes a freely rotating transport screw 25a disposed proximate egress extent 24b" of kneading zone 24. Transport screw 25a is preferably an Archimedes screw that maintains a predetermined clearance *t₂₅* between an outermost periphery of a transport thread 25a' and an inside surface 24b'" of kneading chamber 24b. Transport screw 25a includes multiple transport threads 25a' of commensurate pitch that are evenly distributed along a predetermined extent of kneading and transporting agitator 24a. Although FIGS. 4 to 4B show transport screw 25a having four threads 25a', it is understood that the exact number of threads can be determined as a function of the selected masterbatch composition.

Referring further to FIGS. 5, 5A and 5B, mashing section 27 extends between an ingress extent 24b' of kneading chamber 24b toward transporting section 25. Kneading section 27 includes one or more consecutively disposed screw conveyors 27a interrupted by a commensurate number of collinearly disposed transitional transport threads 27b (see FIG. 1). Each screw conveyor 27a includes a generally spiral element that maintains a predetermined clearance t₂₇ between itself and inner wall surface 24b'" of kneading chamber 24b. Selection of a spiral element promulgates a low axial flow and a limited tangential drive, thereby extending the residence time of the composite in kneading zone 24 (i.e., the coagulation time).

To effect continuous feeding of the composite between homogenization zone 20 and kneading zone 24, transitional transport threads 27b include an introductory transport thread 27b' disposed proximate ingress extent 24b' of kneading chamber 24b. Each transitional transport thread may be commensurate in structure with threads 25a' of transport screw 25a. Although FIGS. 5 to 5B show kneading section 27 having an assembly of four screw conveyors 27a and four transitional transport threads 27b (including introductory transport thread 27b'), it is understood that the exact number of screw conveyors and transport threads can be determined as a function of the selected masterbatch composition.

In order to facilitate kneading (that is, the mechanical action that propagates the nano-coagulations) while simultaneously effecting a controlled progression of the composite toward a subsequent production step, kneading and transport agitator 24a rotates in a given direction (see arrow E of FIG. 4 and FIG. 5) so as to generate sufficient friction between the composite conveyed thereby and an inner wall surface 24b'" of kneading chamber 24b. The geometry of kneading and transport agitator 24a relative to that of kneading chamber 24b controllably propels the composite toward a subsequent production zone (i.e., wringing zone 28)(see arrow F of FIG. 5). The kneading and transport agitator's rotational speed, governed by a motor M₂₄, establishes the conveyance rate of the composite and the resultant shearing efficiency (e.g., in some embodiments, shearing rates greater than 500 s⁻¹ are realized).

Thus, as soon as the composite contacts initial transitional transport thread 27b', the composite starts to undergo a kneading production process. Dead time during the transition between production steps (i.e., homogenizing and kneading) is thereby obviated. Different volumes of composite, including lower volumes, thus realize the benefit of maintaining a given rotational speed so as to control the composite's residence time in kneading zone 24.

Still referring to FIG. 1 and referring also to FIGS. 6 to 7B, kneading and transport agitator 24a meters the composite from kneading zone 24 toward wringing zone 28 of continuous kneading installation 20, wherein the macro-coagulations derived from the kneading production process are mechanically worked into a suitable form prior to dewatering. In wringing zone 28, an exemplary wringing element includes a wringing agitator 28a of pre-determined length rotatably disposed within a wringing chamber 28b. Wringing chamber 28b has an ingress extent 28b' disposed proximate a discharge end of kneading chamber 24b and an opposed egress extent 28b" from which the composite is discharged as a coagulum. It understood that wringing chamber 28 may assume any cross-sectional geometry that is amenable to practice of the invention.

Wringing element 28a includes each of a texturing section 29 and a wringing section 31 that facilitate complementary processes in wringing zone 28. Referring further to FIGS. 6, 6A and 6B, texturing section 29 includes a freely rotating texturing screw 29a disposed proximate egress extent 24b" of kneading chamber 24b. Texturing screw 29a is preferably an Archimedes screw that maintains a predetermined clearance t₂₉ between an outermost periphery of a cut-off thread 29a' and an inside surface 28b'" of wringing chamber 28b. Texturing screw 29a includes multiple cut-off threads 29a' that are evenly distributed along a predetermined extent of wringing element 28a. It is understood that the exact number of cut-off threads 29a' can be determined as a function of the selected masterbatch composition.

At least one optional transport thread 29b may be included to effect a continuous transition between kneading zone 24 and wringing zone 28 via egress extent 24b" of kneading chamber 24b. For such embodiments, each transport thread 29b may be commensurate in structure with transitional transport threads 27b (including introductory transport thread 27b') described herein with respect to kneading and transport agitator 24a.

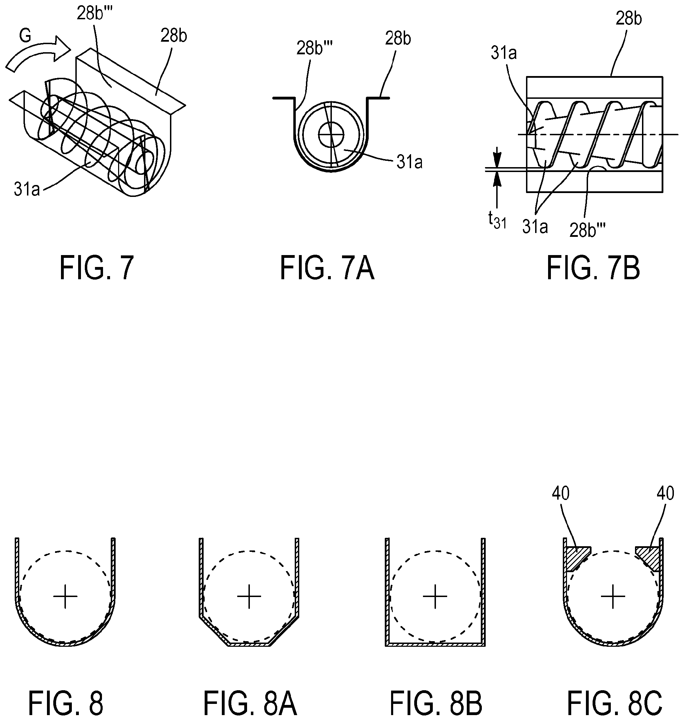

Referring further to FIGS. 7, 7A and 7B, wringing section 31 extends from an extent of wringing element 28a proximate egress extent 28b" of wringing chamber 28b toward texturing section 29. Wringing section 31 includes a conical screw 31a having optional transport threads 31b intermediate the conical screw and texturing section 29 (see FIG. 1). Optional transport threads 31b may be commensurate in structure with transitional transport threads 27b (including introductory transport thread 27b') described herein with respect to kneading and transport agitator 24a. Conical screw 31a includes helical threads 31a' that maintain a predetermined clearance *t₃₁* with respect to inner wall surface 28b'" of wringing chamber 28b.

In order to facilitate wringing (that is, the mechanical action that sustains macrocoagulation) while at the same effecting a controlled progression of the composite toward discharge from system 10, wringing element 28a rotates in a given direction (see arrow G of FIG. 6 and FIG. 7) so as to generate sufficient friction between the composite conveyed thereby and inner wall surface 28b‴ of wringing chamber 28b. The geometry of wringing element 28a relative to that of wringing chamber 28b controllably propels the composite toward egress extent 28b" of wringing chamber 28b and eventual discharge from system 10 (see arrow H of FIG. 1). The wringing element's rotational speed, governed by a motor M₂₈, establishes the conveyance rate of the composite and the resultant shearing efficiency (e.g., in some embodiments, shearing rates greater than 200 s⁻¹ are realized).

Thus, within wringing zone 28, texturing section 29 delimits the coagulum size of the composite before introducing the coagulum to wringing section 31. Wringing section 31 expurgates the composite by stressing the coagulum, for example, at 10 bar to 80 bar of pressure. In some embodiments, 30 bar of pressure is realized.

System 10 thus realizes the discharge of coagulum (i.e., the composite) as a generally continuous output simultaneously with the ongoing alimentation of emulsion 13 and slurry 15 into mixer 16a.

System 10 is adapted to sustain continuous advancement of the composite at atmospheric pressure through kneading zone 24 and wringing zone 28. Referring now to FIGS. 8, 8A, 8B and 8C, each of kneading chamber 24b and wringing chamber 28b possesses a predetermined cross-sectional geometry that impedes rotation of the composite therein. In the exemplary embodiments shown, kneading chamber 24b and wringing chamber 28b are provided as generally annular elements having a round, U-shaped configuration (see FIG. 8). It is understood, however, that other geometries may be substituted therefor that impede rotation of the composite as a corresponding agitator rotates. Such selected geometries include a U-shaped chamfer (see FIG. 8A) and a U-shaped corner (see FIG. 8B). It is also understood that any of these variants may be combined with one or more anti-rotation accessories, including one or more anti-rotation bars 40 (see FIG. 8C).

### EXAMPLE

The following table shows exemplary conditions in which system 10 operates.

**TABLE 1**

| | Silica slurry | Emulsion |
|---|---|---|
| Type | Highly dispersible silica having a specific surface area CTAB of 160 m²/g (^{∗}) doped Mg²⁺ (^{∗∗}) | Natural Rubber (NR) latex high ammonia |
| Minimum mass concentration (%) | 7.4 | 61 |
| Debit (kg/h) | 160 | 27 |
| Injection pressure (bar) | < 1 | < 1 |
| Diameter of conduit in mixer 16a (mm) | 10 | 5 |
| Homogenizing attributes | | Long spire homogenizing element |
| | | Shearing rate: 1000 s⁻¹ |
| | | Residence time in homogenizing zone: about 5 sec |
| Kneading attributes | | Spire kneading element for kneading section 27 |
| | | Shearing rate: 500 s⁻¹ |
| | | Residence time in homogenizing zone: about 180 sec |
| Wringing attributes | | Cut-off thread texturing element |
| | | Shearing rate: 200 s⁻¹ |
| | | Residence time in homogenizing zone: about 180 sec |

| | | |
|---|---|---|
| (^{∗}) Commercially available from Solvay under the mark ZEOSIL^{®} 1165 MP (^{∗∗}) As described in commonly owned Patent Publication WO2013/053733 | | |

Thus, a process for creating a composite as a coagulum may be summarized as including the following steps:
- Homogenizing, that is, performing a level of homogenization necessary to obtain a high yielding hetero-coagulation;
- Kneading, that is, propagating the nano-coagulations that have been generated during homogenization and moving thereby from a liquid to a viscous state; and
- Pre-dewatering, that is, preparing the macro-coagulations by mechanical work and delimiting the size of the coagulums for introduction into a wringing apparatus.

The invention provides a continuous reactor wherein the performance of hetero-coagulation between a charge and an elastomer in an aqueous phase benefits from slow coagulation kinetics. By adapting the geometry of the production zones according to the progress of the coagulation reaction, the invention relies less upon the precise parameters of incoming ingredients to sustain both rapid coagulation and a continuous process.

The composite traverses continuously the requisite production zones for obtaining a masterbatch composition presenting desired properties. These properties are variable and adaptable as a function of the ultimate implementation of the masterbatch composition. For example, for compositions that are destined for the manufacture of tires, the resultant tire should exhibit targeted performance properties (e.g., reduced rolling resistance, etc.).

As used herein, the term "method" or "process" may include one or more steps performed at least by one electronic or computer-based apparatus having a processor for executing instructions that carry out the steps.

Ranges that are described as being "between a and b" are inclusive of the values for "a" and "b."

While particular embodiments of the disclosed apparatus have been illustrated and described, it will be understood that various changes, additions and modifications can be made without departing from the scope of claims.

## Claims

1. A system (10) for continuous controlled progression of a composite within pre-defined coagulum production zones during a coagulation preparation cycle, the system (10) comprising:
an emulsion storage installation (12) having an emulsion reservoir (12a) equipped with an agitator (12b), the emulsion reservoir (12a) storing an elastomer emulsion (13);
a slurry storage installation (14) having a slurry reservoir (14a) equipped with an agitator (14b), the slurry reservoir (14a) storing a slurry (15) comprising an aqueous solution of charge particles;
a mixing installation (16) having a mixer (16a) in fluid communication with each of emulsion reservoir (12a) and slurry reservoir (14a), with the mixer (16a) putting in contact, in a mixing zone (16d) thereof, a flow of the elastomer emulsion (13) and a flow of the slurry (15), with one of the flows leading into the other flow and both flows being brought to low pressure before their contact with one another; and
a continuous kneading installation (18) that receives the composite from the mixing installation (16) and transports the composite through each coagulum production zone such that a residence time of the composite in each coagulum production zone is controlled prior to transport of the composite to a subsequent coagulum production zone,
wherein the coagulum production zones comprise:
a homogenizing zone (20) including a homogenizer (22) having a helical homogenizing agitator (22a) of predetermined length rotatably disposed within a homogenizing chamber (22b) having an ingress extent (22b') that establishes fluid communication between the mixer (16a) and the homogenizer (22) and an opposed egress extent (22b") that establishes fluid communication between the homogenizer (22) and a kneading zone (24);
a kneading zone (24) including a kneading and transporting agitator (24a) of predetermined length rotatably disposed within a kneading chamber 24b having an ingress extent (24b') disposed adjacent the egress extent (22b") of the of homogenizing chamber (22b) and an opposed egress extent (24b") proximate an ingress of a wringing zone (28), the kneading and transporting agitator (24a) having a transporting section (25) and a kneading section (27) that facilitate complementary processes in the kneading zone (24); and
a wringing zone (28) including a wringing agitator (28a) of pre-determined length rotatably disposed within a wringing chamber (28b) having an ingress extent (28b') disposed proximate the egress extent (24b") of the kneading chamber (24b) and an opposed egress extent (28b") from which the composite is discharged as a coagulum, the wringing agitator (28a) including each of a texturing section (29) and a wringing section (31) that facilitate complementary processes in the wringing zone (28).

2. The system of claim 1, wherein the transporting section (25) of the kneading and transporting agitator (24a) comprises a freely rotating transport screw (25a) disposed proximate the egress extent (24b") of the kneading zone (24) and having multiple transport threads (25a') of commensurate pitch evenly distributed along a predetermined extent of the kneading and transporting agitator (24a).

3. The system of claim 2, wherein the transport screw (25a) comprises an Archimedes screw that maintains a predetermined clearance *t₂₅* between an outermost periphery of a transport thread (25a') and an inside surface (24b‴) of the kneading chamber (24b).

4. The system of any of claims 1 to 3, wherein the kneading section (27) of the kneading and transporting agitator (24a) extends between the ingress extent (24b') of the kneading chamber (24b) toward the transporting section (25) and comprises one or more consecutively disposed screw conveyors (27a) interrupted by a commensurate number of collinearly disposed transitional transport threads (27b).

5. The system of claim 4, wherein each screw conveyor (27a) comprises a generally spiral element that maintains a predetermined clearance (t₂₇) between itself and an inner wall surface (24b‴) of the kneading chamber (24b).

6. The system of claim 4 or claim 5, wherein the transitional transport threads (27b) comprise an introductory transport thread (27b') disposed proximate the ingress extent (24b') of the kneading chamber (24b) at which the composite starts to undergo a kneading production process.

7. The system of any of claims 1 to 6, wherein the texturing section (29) of the wringing agitator (28a) comprises a freely rotating texturing screw (29a) disposed proximate the egress extent (24b") of the kneading chamber (24b) and having multiple cut-off threads (29a') that are evenly distributed along a predetermined extent of wringing element (28a).

8. The system of claim 7, wherein the texturing screw (29a) comprises an Archimedes screw that maintains a predetermined clearance (t₂₉) between an outermost periphery of a cut-off thread (29a') and an inside surface (28b‴) of the wringing chamber (28b).

9. The system of claim 7 or claim 8, further comprising at least one transport thread (29b) disposed proximate the egress extent (24b") of the kneading chamber (24b) to effect a continuous transition between the kneading zone (24) and the wringing zone (28).

10. The system of any of claims 7 to 9, wherein the wringing section (31) of the wringing agitator (28a) extends from an extent of the wringing element (28a) proximate the egress extent (28b") of the wringing chamber (28b) toward the texturing section (29) and comprises a conical screw (31a).

11. The system of claim 10, wherein the conical screw (31a) includes helical threads (31a') that maintain a predetermined clearance (*t₃₁*) with respect to an inner wall surface (28b‴) of the wringing chamber (28b).

12. The system of claim 10 or claim 11, wherein the wringing section (31) of the wringing agitator (28a) further comprises one or more transport threads (31b) disposed intermediate the conical screw (31a) and the texturing section (29).

13. The system of any of claims 1 to 12, wherein each of the kneading chamber (24b) and the wringing chamber (28b) has a predetermined cross-sectional geometry selected from a generally annular configuration, a U-shaped chamfer and a U-shaped corner.

14. The system of claim 13, further comprising one or more anti-rotation bars (40) disposed within at least a portion of at least one of the kneading chamber (24) and the wringing chamber (28).

15. A process for continuous controlled progression of a composite within pre-defined coagulum production zones during production of an elastomeric masterbatch composition, the process comprising the following steps:
providing each of an emulsion (13) stored in a liquid phase in an emulsion reservoir (12a) and a slurry (15) stored in a liquid phase in a slurry reservoir (14a);
delivering simultaneously a predetermined volume of the emulsion (13) and a predetermined volume of the slurry (15) to a mixing installation (16) having a mixer (16a) in fluid communication with each of the emulsion reservoir (12a) and the slurry reservoir (14a);
preparing the composite from the predetermined volume of the emulsion (13) and the predetermined volume of the slurry (15);
discharging the composite from the mixer (16a) as a fine dispersion of elastomeric charge; and
transporting the composite through each coagulum production zone of a continuous kneading installation (18) such that a residence time of the composite in each coagulum production zone is controlled prior to transport of the composite to a subsequent coagulum production zone;
**characterized in that**
the coagulum production zones comprise:
a homogenizing zone (20) including a homogenizer (22) having a helical homogenizing agitator (22a) of predetermined length rotatably disposed within a homogenizing chamber (22b);
a kneading zone (24) including a kneading and transporting agitator (24a) of predetermined length rotatably disposed within a kneading chamber 24b, the kneading and transporting agitator (24a) having a transporting section (25) and a kneading section (27) that facilitate complementary processes in the kneading zone (24); and
a wringing zone (28) including a wringing agitator (28a) of pre-determined length rotatably disposed within a wringing chamber (28b), the wringing agitator (28a) including each of a texturing section (29) and a wringing section (31) that facilitate complementary processes in wringing zone (28).

16. The process of claim 15, further comprising putting in contact, in a mixing zone (16d) of the mixer (16a), a flow of the elastomer emulsion and a flow of the slurry, with one of the flows leading into the other flow and both flows being brought to low pressure before their contact with one another.

17. The process of claim 15 or 16, further comprising the following steps:
discharging the composite from the mixer (16a) to the homogenizing zone (20); and
with the homogenizing agitator (22a,) agitating the composite at a minimum shearing rate of 1000 s⁻¹ while simultaneously effecting a controlled progression of the composite toward the kneading zone (24).

18. The process of any of claims 15 to 17, further comprising the following steps:
discharging the composite from the homogenizing zone (20) to the kneading zone (24); and
with the kneading and transporting agitator (24a), agitating the composite at a minimum shearing rate of 500 s⁻¹ while simultaneously effecting a controlled progression of the composite toward the wringing zone (28).

19. The process of any of claims 15 to 18, further comprising the following steps:
discharging the composite from the kneading zone (24) to the wringing zone (28);
delimiting a coagulum size of the composite along the texturing section (29) before introducing the composite to the wringing section (31); and
with the wringing agitator (28a), agitating the composite at a minimum shearing rate of 200 s⁻¹ while simultaneously effecting a controlled progression of the composite for discharge from the controlled kneading installation (18).

20. The process of any of claims 15 to 19, further comprising the step of discharging the composite from the continuous kneading installation (18).

21. The process of claim 20, further comprising the step of delivering simultaneously the emulsion (13) and the slurry (15) to the mixing installation (16).

## Patentansprüche

1. System (10) zur kontinuierlichen gesteuerten Progression eines Verbundwerkstoffs innerhalb von vordefinierten Koagulumproduktionszonen während eines Koagulierungsherstellungszyklus, wobei das System (10) umfasst:
eine Emulsionslagerungsinstallation (12) mit einem Emulsionsreservoir (12a), das mit einem Rührwerk (12b) ausgestattet ist, wobei in dem Emulsionsreservoir (12a) eine Elastomeremulsion (13) gelagert ist;
eine Aufschlämmungslagerungsinstallation (14) mit einem Aufschlämmungsreservoir (14a), das mit einem Rührwerk (14b) ausgestattet ist, wobei in dem Aufschlämmungsreservoir (14a) eine Aufschlämmung (15) gelagert ist, die eine wässrige Lösung von Ansatzpartikeln umfasst;
eine Mischinstallation (16) mit einem Mischer (16a) in Fließkommunikation mit jedem von dem Emulsionsreservoir (12a) und dem Aufschlämmungsreservoir (14a), wobei der Mischer (16a) in einer Mischzone (16d) desselben einen Fluss der Elastomeremulsion (13) und einen Fluss der Aufschlämmung (15) in Kontakt bringt, wobei einer der Flüsse in den anderen Fluss führt und beide Flüsse vor ihrem Kontakt miteinander auf einen niedrigen Druck gebracht werden; und
eine kontinuierliche Knetinstallation (18), die den Verbundwerkstoff aus der Mischinstallation (16) empfängt und den Verbundwerkstoff durch jede Koagulumproduktionszone hindurch transportiert, so dass eine Verweilzeit des Verbundwerkstoffs in jeder Koagulumproduktionszone vor dem Transport des Verbundwerkstoffs zu einer nachfolgenden Koagulumproduktionszone gesteuert wird,
wobei die Koagulumproduktionszonen umfassen:
eine Homogenisierungszone (20), die einen Homogenisierer (22) mit einem helixförmigen Homogenisierungsrührwerk (22a) mit einer vorbestimmten Länge einschließt, das rotierbar innerhalb einer Homogenisierungskammer (22b) angeordnet ist, mit einem Eintrittsmaß (22b'), das Fließkommunikation zwischen dem Mischer (16a) und dem Homogenisierer (22) einrichtet, und einem gegenüber liegenden Austrittsmaß (22b"), das Fließkommunikation zwischen dem Homogenisierer (22) und einer Knetzone (24) einrichtet;
eine Knetzone (24), die ein Knet- und Transportrührwerk (24a) mit einer vorbestimmten Länge einschließt, das rotierbar innerhalb einer Knetkammer 24b angeordnet ist, mit einem Eintrittsmaß (24b'), das benachbart zu dem Austrittsmaß (22b") der Homogenisierungskammer (22b) angeordnet ist, und einem gegenüber liegenden Austrittsmaß (24b") nahe einem Eintritt einer Wringzone (28), wobei das Knet- und Transportrührwerk (24a) einen Transportabschnitt (25) und einen Knetabschnitt (27) aufweist, die komplementäre Prozesse in der Knetzone (24) erleichtern; und
eine Wringzone (28), die ein Wringrührwerk (28a) mit einer vorbestimmten Länge einschließt, das rotierbar innerhalb einer Wringkammer (28b) angeordnet ist, mit einem Eintrittsmaß (28b'), das nahe dem Austrittsmaß (24b") der Knetkammer (24b) angeordnet ist, und einem gegenüber liegenden Austrittsmaß (28b"), aus dem der Verbundwerkstoff als Koagulum ausgetragen wird, wobei das Wringrührwerk (28a) jeden von einem Texturierabschnitt (29) und einem Wringabschnitt (31) einschließt, die komplementäre Prozesse in der Wringzone (28) erleichtern.

2. System nach Anspruch 1, wobei der Transportabschnitt (25) des Knet- und Transportrührwerks (24a) eine frei rotierende Transportschnecke (25a) umfasst, die nahe dem Austrittsmaß (24b") der Knetzone (24) angeordnet ist und mehrere Transportgewinde (25a') mit angemessener Ganghöhe gleichförmig verteilt entlang eines vorbestimmten Maßes des Knet- und Transportrührwerks (24a) aufweist.

3. System nach Anspruch 2, wobei die Transportschnecke (25a) eine archimedische Schnecke umfasst, die ein vorbestimmtes Spiel *t₂₅* zwischen einer äußersten Peripherie eines Transportgewindes (25a') und einer inneren Oberfläche (24b'") der Knetkammer (24b) beibehält.

4. System nach einem der Ansprüche 1 bis 3, wobei der Knetabschnitt (27) des Knet- und Transportrührwerks (24a) sich zwischen dem Eintrittsmaß (24b') der Knetkammer (24b) in Richtung des Transportabschnitts (25) erstreckt und einen oder mehrere nacheinander angeordnete Schneckenförderer (27a) umfasst, die durch eine angemessene Anzahl von kolinear angeordneten Übergangstransportgewinden (27b) unterbrochen sind.

5. System nach Anspruch 4, wobei jeder Schneckenförderer (27a) ein allgemein spiralförmiges Element umfasst, das ein vorbestimmtes Spiel (*t₂₇*) zwischen sich selbst und einer Innenwandoberfläche (24b'") der Knetkammer (24b) beibehält.

6. System nach Anspruch 4 oder Anspruch 5, wobei die Übergangstransportgewinde (27b) ein Einführungstransportgewinde (27b') umfassen, das nahe dem Eintrittsmaß (24b') der Knetkammer (24b) angeordnet ist, in der der Verbundwerkstoff beginnt, einem Knetproduktionsprozess unterzogen zu werden.

7. System nach einem der Ansprüche 1 bis 6, wobei der Texturierabschnitt (29) des Wringrührwerks (28a) eine frei rotierende Texturierschnecke (29a) umfasst, die nahe dem Austrittsmaß (24b") der Knetkammer (24b) angeordnet ist und mehrere Abtrenngewinde (29a') aufweist, die gleichförmig entlang eines vorbestimmten Maßes des Wringelements (28a) verteilt sind.

8. System nach Anspruch 7, wobei die Texturierschnecke (29a) eine archimedische Schnecke umfasst, die ein vorbestimmtes Spiel (*t₂₉*) zwischen einer äußersten Peripherie eines Abtrenngewindes (29a') und einer inneren Oberfläche (28b'") der Wringkammer (28b) beibehält.

9. System nach Anspruch 7 oder Anspruch 8, des Weiteren umfassend mindestens ein Transportgewinde (29b), das nahe dem Austrittsmaß (24b") der Knetkammer (24b) angeordnet ist, um einen kontinuierlichen Übergang zwischen der Knetzone (24) und der Wringzone (28) zu bewirken.

10. System nach einem der Ansprüche 7 bis 9, wobei der Wringabschnitt (31) des Wringrührwerks (28a) sich von einem Maß des Wringelements (28a) nahe dem Austrittsmaß (28b") der Wringkammer (28b) in Richtung des Texturierabschnitts (29) erstreckt und eine konische Schnecke (31a) umfasst.

11. System nach Anspruch 10, wobei die konische Schnecke (31a) helixförmige Gewinde (31a') einschließt, die ein vorbestimmtes Spiel (*t₃₁*) in Bezug auf eine Innenwandoberfläche (28"') der Wringkammer (28b) beibehalten.

12. System nach Anspruch 10 oder Anspruch 11, wobei der Wringabschnitt (31) des Wringrührwerks (28a) des Weiteren ein oder mehrere Transportgewinde (31b) umfasst, die zwischen der konischen Schnecke (31a) und dem Texturierabschnitt (29) angeordnet sind.

13. System nach einem der Ansprüche 1 bis 12, wobei jede von der Knetkammer (24b) und der Wringkammer (28b) eine vorbestimmte Querschnittgeometrie hat, die ausgewählt ist aus einer allgemein ringförmigen Konfiguration, einer U-förmigen Schräge und einer U-förmigen Ecke.

14. System nach Anspruch 13, des Weiteren umfassend ein oder mehrere Verdrehschutzbalken (40), der/die innerhalb von mindestens einem Anteil von mindestens einer von der Knetkammer (24) und der Wringkammer (28) angeordnet ist/sind.

15. Verfahren zur kontinuierlichen gesteuerten Progression eines Verbundwerkstoffs innerhalb vordefinierter Koagulumproduktionszonen während der Produktion einer elastomeren Masterbatch-Zusammensetzung, wobei das Verfahren die folgenden Schritte umfasst:
Bereitstellen von jeder von einer Emulsion (13), die in einer flüssigen Phase in einem Emulsionsreservoir (12a) gelagert ist, und einer Aufschlämmung (15), die in einer flüssigen Phase in einem Aufschlämmungsreservoir (14a) gelagert ist;
simultanes Abgeben eines vorbestimmten Volumens der Emulsion (13) und eines vorbestimmten Volumens der Aufschlämmung (15) in eine Mischinstallation (16), die einen Mischer (16a) in Fließkommunikation mit jedem von dem Emulsionsreservoir (12a) und dem Aufschlämmungsreservoir (14a) aufweist;
Herstellen des Verbundwerkstoffs aus dem vorbestimmten Volumen der Emulsion (13) und dem vorbestimmten Volumen der Aufschlämmung (15);
Austragen des Verbunds aus dem Mischer (16a) als feine Dispersion von Elastomeransatz; und
Transportieren des Verbundwerkstoffs durch jede Koagulumproduktionszone einer kontinuierlichen Knetinstallation (18) derart, dass eine Verweilzeit des Verbundwerkstoffs in jeder Koagulumproduktionszone gesteuert wird, bevor der Verbundwerkstoff in eine nachfolgende Koagulumproduktionszone transportiert wird;
**dadurch gekennzeichnet, dass** die Koagulumproduktionszonen umfassen:
eine Homogenisierungszone (20), die einen Homogenisierer (22) mit einem helixförmigen Homogenisierungsrührwerk (22a) mit vorbestimmter Länge aufweist, das rotierbar innerhalb einer Homogenisierungskammer (22b) angeordnet ist;
eine Knetzone (24), die ein Knet- und Transportrührwerk (24a) mit vorbestimmter Länge einschließt, das rotierbar innerhalb einer Knetkammer 24b angeordnet ist, wobei das Knet- und Transportrührwerk (24a) einen Transportabschnitt (25) und einen Knetabschnitt (27) aufweist, die komplementäre Prozesse in der Knetzone (24) erleichtern; und
eine Wringzone (28), die ein Wringrührwerk (28a) mit vorbestimmter Länge einschließt, das rotierbar innerhalb einer Wringkammer (28b) angeordnet ist, wobei das Wringrührwerk (28a) jedes von einem Texturierabschnitt (29) und einem Wringabschnitt (31) einschließt, die komplementäre Prozesse in der Wringzone (28) erleichtern.

16. Verfahren nach Anspruch 15, des Weiteren umfassend Inkontaktbringen eines Flusses der Elastomeremulsion und eines Flusses der Aufschlämmung in einer Mischzone (16d) des Mischers (16a), wobei einer der Flüsse in den anderen Fluss führt und beide Flüsse auf niedrigen Druck gebracht werden, bevor sie miteinander in Kontakt kommen.

17. Verfahren nach Anspruch 15 oder 16, des Weiteren umfassend die folgenden Schritte:
Austragen des Verbundwerkstoffs aus dem Mischer (16a) in die Homogenisierungszone (20); und
mit dem Homogenisiererrührwerk (22a) Rühren des Verbundwerkstoffs mit einer minimalen Scherrate von 1000 s⁻¹, während simultan eine gesteuerte Progression des Verbundwerkstoffs zu der Knetzone (24) bewirkt wird.

18. Verfahren nach einem der Ansprüche 15 bis 17, des Weiteren umfassend die folgenden Schritte:
Austragen des Verbundwerkstoffs aus der Homogenisierungszone (20) in die Knetzone (24); und
mit dem Knet- und Transportrührwerk (24a) Rühren des Verbundwerkstoffs mit einer minimalen Scherrate von 500 s⁻¹, während simultan eine gesteuerte Progression des Verbundwerkstoffs zu der Wringzone (28) bewirkt wird.

19. Verfahren nach einem der Ansprüche 15 bis 18, des Weiteren umfassend die folgenden Schritte:
Austragen des Verbundwerkstoffs aus der Knetzone (24) in die Wringzone (28);
Begrenzen der Koagulumgröße des Verbundwerkstoffs entlang des Texturierabschnitts (29) vor dem Einbringen des Verbundwerkstoffs in den Wringabschnitt (31); und
mit dem Wringrührwerk (28a) Rühren des Verbundwerkstoffs mit einer minimalen Scherrate von 200 s⁻¹, während simultan eine gesteuerte Progression des Verbundwerkstoffs zur Austragung aus der gesteuerten Knetinstallation (18) bewirkt wird.

20. Verfahren nach einem der Ansprüche 15 bis 19, des Weiteren umfassend den Schritt des Austragens des Verbundwerkstoffs aus der kontinuierlichen Knetinstallation (18).

21. Verfahren nach Anspruch 20, des Weiteren umfassend den Schritt des simultanen Abgebens der Emulsion (13) und der Aufschlämmung (15) an die Mischinstallation (16).

## Revendications

1. Système (10) servant à la progression régulée continue d'un composite à l'intérieur de zones de production de coagulum prédéfinies au cours d'un cycle de préparation de coagulation, le système (10) comprenant :
une installation de stockage d'émulsion (12) comportant un réservoir d'émulsion (12a) équipé d'un dispositif d'agitation (12b), le réservoir d'émulsion (12a) stockant une émulsion d'élastomère (13) ;
une installation de stockage de pâte fluide (14) comportant un réservoir de pâte fluide (14a) équipé d'un dispositif d'agitation (14b), le réservoir de pâte fluide (14a) stockant une pâte fluide (15) comprenant une solution aqueuse de particules de charge ;
une installation de mélange (16) comportant un dispositif de mélange (16a) en communication fluidique avec chacun du réservoir d'émulsion (12a) et du réservoir de pâte fluide (14a), le dispositif de mélange (16a) mettant en contact, dans une zone de mélange (16d) de celui-ci, un écoulement de l'émulsion d'élastomère (13) et un écoulement de la pâte fluide (15), l'un des écoulements venant s'incorporer dans l'autre écoulement et les deux écoulements étant amenés à une faible pression avant leur entrée en contact l'un avec l'autre ; et
une installation de malaxage continu (18) qui reçoit le composite provenant de l'installation de mélange (16) et transporte le composite à travers chaque zone de production de coagulum de telle sorte qu'un temps de séjour du composite dans chaque zone de production de coagulum soit régulé avant le transport du composite à une zone de production de coagulum suivante,
dans lequel les zones de production de coagulum comprennent :
une zone d'homogénéisation (20) comportant un dispositif d'homogénéisation (22) pourvu d'un dispositif d'agitation d'homogénéisation hélicoïdal (22a) d'une longueur prédéterminée disposé à rotation à l'intérieur d'une chambre d'homogénéisation (22b) comportant un segment d'entrée (22b') qui établit une communication fluidique entre le dispositif de mélange (16a) et le dispositif d'homogénéisation (22) et un segment de sortie (22b") opposé qui établit une communication fluidique entre le dispositif d'homogénéisation (22) et une zone de malaxage (24) ;
une zone de malaxage (24) comportant un dispositif d'agitation de malaxage et de transport (24a) d'une longueur prédéterminée disposé à rotation à l'intérieur d'une chambre de malaxage (24b) comportant un segment d'entrée (24b') en position adjacente au segment de sortie (22b") de la chambre d'homogénéisation (22b) et un segment de sortie (24b") opposé à proximité d'une entrée d'une zone d'essorage (28), le dispositif d'agitation de malaxage et de transport (24a) comportant une section de transport (25) et une section de malaxage (27) qui facilitent la réalisation de procédés complémentaires dans la zone de malaxage (24) ; et
une zone d'essorage (28) comprenant un dispositif d'agitation d'essorage (28a) d'une longueur prédéterminée disposé à rotation à l'intérieur d'une chambre d'essorage (28b) comportant un segment d'entrée (28b') disposé à proximité du segment de sortie (24b") de la chambre de malaxage (24b) et un segment de sortie (28b") opposé depuis lequel le composite est évacué sous la forme d'un coagulum, le dispositif d'agitation d'essorage (28a) comprenant une section de texturation (29) et une section d'essorage (31) qui facilitent la réalisation de procédés complémentaires dans la zone d'essorage (28).

2. Système selon la revendication 1, dans lequel la section de transport (25) du dispositif d'agitation de malaxage et de transport (24a) comprend une vis de transport à rotation libre (25a) disposée à proximité du segment de sortie (24b") de la zone de malaxage (24) et comportant de multiples filets de transport (25a') de pas égal répartis de manière uniforme le long d'un segment prédéterminé du dispositif d'agitation de malaxage et de transport (24a).

3. Système selon la revendication 2, dans lequel la vis de transport (25a) comprend une vis d'Archimède qui maintient un dégagement (*t₂₅*) prédéterminé entre une périphérie extérieure d'un filet de transport (25a') et une surface intérieure (24b‴) de la chambre de malaxage (24b).

4. Système selon l'une quelconque des revendications 1 à 3, dans lequel la section de malaxage (27) du dispositif d'agitation de malaxage et de transport (24a) s'étend entre le segment d'entrée (24b') de la chambre de malaxage (24b) en direction de la section de transport (25) et comprend un ou plusieurs dispositifs de transport à vis (27a) disposés de manière successive, interrompus par un nombre égal de filets de transport transitionnels (27b) disposés de manière colinéaire.

5. Système selon la revendication 4, dans lequel chaque dispositif de transport à vis (27a) comprend un élément globalement spiralé qui maintient un dégagement (t₂₇) prédéterminé entre lui-même et une surface de paroi intérieure (24b‴) de la chambre de malaxage (24b).

6. Système selon la revendication 4 ou la revendication 5, dans lequel les filets de transport transitionnels (27b) comprennent un filet de transport d'introduction (27b') disposé à proximité du segment d'entrée (24b') de la chambre de malaxage (24b) au niveau duquel le composite commence à subir un procédé de production de malaxage.

7. Système selon l'une quelconque des revendications 1 à 6, dans lequel la section de texturation (29) du dispositif d'agitation d'essorage (28a) comprend une vis de texturation à rotation libre (29a) disposée à proximité du segment de sortie (24b") de la chambre de malaxage (24b) et comportant de multiples filets de coupe (29a') qui sont répartis de manière uniforme le long d'un segment prédéterminé de l'élément d'essorage (28a).

8. Système selon la revendication 7, dans lequel la vis de texturation (29a) comprend une vis d'Archimède qui maintient un dégagement (t₂₉) prédéterminé entre une périphérie extérieure d'un filet de coupe (29a') et une surface intérieure (28b‴) de la chambre d'essorage (28b).

9. Système selon la revendication 7 ou la revendication 8, comprenant en outre au moins un filet de transport (29b) disposé à proximité du segment de sortie (24b") de la chambre de malaxage (24b) de façon à produire une transition continue entre la zone de malaxage (24) et la zone d'essorage (28).

10. Système selon l'une quelconque des revendications 7 à 9, dans lequel la section d'essorage (31) du dispositif d'agitation d'essorage (28a) s'étend à partir d'un segment de l'élément d'essorage (28a) à proximité du segment de sortie (28b") de la chambre d'essorage (28b) en direction de la section de texturation (29) et comprend une vis conique (31a).

11. Système selon la revendication 10, dans lequel la vis conique (31a) comprend des filets hélicoïdaux (31a') qui maintiennent un dégagement (*t₃₁*) prédéterminé par rapport à une surface de paroi intérieure (28b‴) de la chambre d'essorage (28b).

12. Système selon la revendication 10 ou la revendication 11, dans lequel la section d'essorage (31) du dispositif d'agitation d'essorage (28a) comprend en outre un ou plusieurs filets de transport (31b) disposés entre la vis conique (31a) et la section de texturation (29).

13. Système selon l'une quelconque des revendications 1 à 12, dans lequel chacune de la chambre de malaxage (24b) et de la chambre d'essorage (28b) présente une géométrie en section transversale prédéterminée sélectionnée parmi une configuration globalement annulaire, une configuration chanfreinée en forme de U et une configuration angulaire en forme de U.

14. Système selon la revendication 13, comprenant en outre une ou plusieurs barres anti-rotation (40) disposées à l'intérieur d'au moins une partie de la chambre de malaxage (24) et/ou de la chambre d'essorage (28) .

15. Procédé pour la progression régulée continue d'un composite à l'intérieur de zones de production de coagulum prédéfinies au cours de la production d'une composition de mélange-maître élastomérique, le procédé comprenant les étapes suivantes :
prévoir chacune d'une émulsion (13) stockée en phase liquide dans un réservoir d'émulsion (12a) et d'une pâte fluide (15) stockée en phase liquide dans un réservoir de pâte fluide (14a) ;
distribuer simultanément un volume prédéterminé de l'émulsion (13) et un volume prédéterminé de la pâte fluide (15) à une installation de mélange (16) comportant un dispositif de mélange (16a) en communication fluidique avec chacun du réservoir d'émulsion (12a) et du réservoir de pâte fluide (14a) ;
préparer le composite à partir du volume prédéterminé de l'émulsion (13) et du volume prédéterminé de la pâte fluide (15) ;
évacuer le composite du dispositif de mélange (16a) sous la forme d'une dispersion fine de charge élastomérique ; et
transporter le composite à travers chaque zone de production de coagulum d'une installation de malaxage continu (18) de telle sorte qu'un temps de séjour du composite dans chaque zone de production de coagulum soit régulé avant le transport du composite à une zone de production de coagulum suivante,
**caractérisé en ce que** les zones de production de coagulum comprennent :
une zone d'homogénéisation (20) comportant un dispositif d'homogénéisation (22) pourvu d'un dispositif d'agitation d'homogénéisation hélicoïdal (22a) d'une longueur prédéterminée disposé à rotation à l'intérieur d'une chambre d'homogénéisation (22b) ;
une zone de malaxage (24) comportant un dispositif d'agitation de malaxage et de transport (24a) d'une longueur prédéterminée disposé à rotation à l'intérieur d'une chambre de malaxage (24b), le dispositif d'agitation de malaxage et de transport (24a) comportant une section de transport (25) et une section de malaxage (27) qui facilitent la réalisation de procédés complémentaires dans la zone de malaxage (24) ; et
une zone d'essorage (28) comprenant un dispositif d'agitation d'essorage (28a) d'une longueur prédéterminée disposé à rotation à l'intérieur d'une chambre d'essorage (28b), le dispositif d'agitation d'essorage (28a) comprenant une section de texturation (29) et une section d'essorage (31) qui facilitent la réalisation de procédés complémentaires dans la zone d'essorage (28).

16. Procédé selon la revendication 15, comprenant en outre le fait de mettre en contact, dans une zone de mélange (16d) du dispositif de mélange (16a), un écoulement de l'émulsion d'élastomère et un écoulement de la pâte fluide, l'un des écoulements venant s'incorporer dans l'autre écoulement et les deux écoulements étant amenés à une faible pression avant leur entrée en contact l'un avec l'autre.

17. Procédé selon la revendication 15 ou 16, comprenant en outre les étapes suivantes :
évacuer le composite du dispositif de mélange (16a) à la zone d'homogénéisation (20) ; et
à l'aide du dispositif d'agitation d'homogénéisation (22a), agiter le composite à une vitesse de cisaillement minimum de 1000 s⁻¹ tout en mettant simultanément en œuvre une progression régulée du composite en direction de la zone de malaxage (24).

18. Procédé selon l'une quelconque des revendications 15 à 17, comprenant en outre les étapes suivantes :
évacuer le composite de la zone d'homogénéisation (20) à la zone de malaxage (24) ; et
à l'aide du dispositif d'agitation de malaxage et de transport (24a), agiter le composite à une vitesse de cisaillement minimum de 500 s⁻¹ tout en mettant simultanément en œuvre une progression régulée du composite en direction de la zone d'essorage (28).

19. Procédé selon l'une quelconque des revendications 15 à 18, comprenant en outre les étapes suivantes :
évacuer le composite de la zone de malaxage (24) à la zone d'essorage (28) ;
délimiter une taille de coagulum du composite le long de la section de texturation (29) avant d'introduire le composite dans la section d'essorage (31) ; et
à l'aide du dispositif d'agitation d'essorage (28a), à agiter le composite à une vitesse de cisaillement minimum de 200 s⁻¹ tout en mettant simultanément en œuvre une progression régulée du composite en vue de son évacuation de l'installation de malaxage régulé (18).

20. Procédé selon l'une quelconque des revendications 15 à 19, comprenant en outre l'étape consistant à évacuer le composite de l'installation de malaxage continu (18).

21. Procédé selon la revendication 20, comprenant en outre l'étape consistant à distribuer l'émulsion (13) et la pâte fluide (15) de manière simultanée à l'installation de mélange (16).
